(19) Europäisches Patentamt
European Patent Office
Office européen des brevets

(11) **EP 3 087 423 B1**

(12) **EUROPEAN PATENT SPECIFICATION**

(45) Date of publication and mention
of the grant of the patent:
**10.12.2025   Bulletin 2025/50**

(21) Application number: **14833432.9**

(22) Date of filing: **24.12.2014**

(51) International Patent Classification (IPC):
**G02B 21/00** (2006.01)        **G01N 21/64** (2006.01)
**G01N 1/06** (2006.01)

(52) Cooperative Patent Classification (CPC):
**G01N 21/6458; G02B 21/0032; G02B 21/004;**
G01N 1/06; G02B 2207/114

(86) International application number:
**PCT/US2014/072368**

(87) International publication number:
**WO 2015/100421 (02.07.2015 Gazette 2015/26)**

(54) **MULTI-FOCI MULTIPHOTON IMAGING SYSTEMS AND METHODS**

MULTIFOKALE MULTIPHOTONBILDGEBUNGSSYSTEME UND VERFAHREN

SYSTÈMES ET PROCÉDÉS D'IMAGERIE MULTIPHOTONS À FOYERS MULTIPLES

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority:   **24.12.2013   US 201361920654 P**

(43) Date of publication of application:
**02.11.2016   Bulletin 2016/44**

(73) Proprietor: **Tissuevision, Inc.**
**Somerville, MA 02143 (US)**

(72) Inventors:
• **RAGAN, Timothy**
**Somerville, MA 02143 (US)**
• **YEW, Elijah**
**Somerville, MA 02143 (US)**

(74) Representative: **Hoffmann Eitle**
**Patent- und Rechtsanwälte PartmbB**
**Arabellastraße 30**
**81925 München (DE)**

(56) References cited:
**EP-A- 1 580 586          EP-A1- 2 249 194
WO-A1-00/42417          WO-A1-02/084265
WO-A2-2006/127967       US-A1- 2005 036 667
US-A1- 2008 192 231**

**Description**

CROSS-REFERENCE TO RELATED APPLICATIONS

This application claims priority to U.S. provisional application serial no. 61/920,654, filed December 24, 2013, entitled "MULTI-FOCI MULTIPHOTON IMAGING SYSTEMS AND METHODS".

## BACKGROUND

A fundamental and ongoing challenge faced by biologists is to understand the function of complex biological systems. In addressing this challenge, the importance of knowing the global structure of the system has repeatedly proven crucial. Examples range from DNA to whole organisms: The discovery of DNA's double helix immediately suggested its copying mechanism, and the 3D arrangement of the 2D linear sequence of amino acids in a polypeptide chain was vital to reveal the basis of enzymatic specificity. In the case of an organ, the fundamental structural and genetic unit is the cell, and thus to faithfully to describe its architecture it's necessary to resolve the 3D position, morphometry, and biochemical state of individual cells throughout the organ. Unfortunately, no imaging tools exist which can quickly generate 3D subcellular images of whole organs. This represents a serious impediment to biomedical progress, particularly given the explosion of fluorescent based transgenic models, labeling protocols, and the overall rapid advancement in genomic and proteomic tools which demand subsequent phenotypic classification.

Two-photon (or multiphoton) excitation imaging, for example, two-photon microscopy (TPM), utilizes a fluorescence imaging technique that advantageously enables imaging of living tissue (*in vivo*) at a relatively high imaging depth. Typically, two-photon excitation imaging utilizes red-shifted excitation light to induce fluorescence in a sample (notably, using infrared light minimizes scattering in the tissue). More than one photon of excitation light are absorbed to reach an exited state. Due to the nonlinear nature of the excitation process, two-photon excitation imaging advantageously provides inherent 3D sectioning, an excellent imaging depth of several hundred microns, minimal photobleaching of out of focus regions, and superior background rejection arising from the wide separation of excitation and emission wavelengths. Thus, two-photon excitation imaging may be a superior alternative to confocal microscopy due to its deeper tissue penetration, efficient light detection, and reduced phototoxicity. Two-photon excitation imaging also offers significant advantages for ex vivo imaging. Unlike light sheet approaches it works well with opaque or partially cleared sample and there is little photobleaching of out of focus regions. Further, large field of views with small depths of focus can be used which are only limited by the optics of the objective. In contrast, the confocal parameter of the light sheet limits the field of view to often less than 500 microns and even within this region the z illumination profile can be 20 microns or more.

Previously, multiphoton imaging has employed a "descanned" methodology where light from the sample arrives at the detector after transmission through the scanning system. While the descanned approach has shown substantial improvement over a non-descanned approach, there still exist significant limitations. First, the field of view is restricted due to point spread function (PSF) aberrations in non-paraxial foci. Next, there is a significant (for example, 70% loss or greater) of the emission signal from de-scanning through the excitation optics. Also, high laser powers and thus high photon fluxes lead to large current at the common anode in a MA-PMT which results in either PMT saturation or damage. Thus, there exists a need for improved multi-foci multiphoton imaging systems and methods that address these and other limitations.

WO 02/084265 A1 discloses multiple photon excitation of a sample, whereby a laser beam is split into at least two coherent partial beams of the same intensity distribution about their respective beam axes. The partial beams, which originate from different directions, are directed onto a common measuring plane that runs transversely to the beam axes, in such a way that they interfere with one another in the area of the measuring plane. The partial beams are directed towards one another at an inclination angle <1 and are directed onto the measuring plane by means of a common system of lenses, in such a way that an intensity distribution in the area of the measuring plane, caused by the interference of the partial beams, comprises areas of maximum intensity adjacent to areas of minimum intensity.

A multi-foci multiphoton imaging system is disclosed in WO 2006/127967 A2.

## SUMMARY

In a first aspect of the present invention, there is provided a multi-foci multiphoton imaging system according to Claim 1.

In a second aspect of the present invention, there is provided a method according to Claim 8.

Systems and methods of the present disclosure implement high speed imaging in conjunction with sequential sectioning utilizing multi-foci multiphoton excitation that can advantageously image, for example, entire organs with micron resolution in less than a day. The systems and methods advantageously overcome several long standing technical problems with multi-focal, multi-photon microscopy (MMM) systems for deep tissue imaging, and are suited for ex vivo whole organ imaging. The ability to fluorescently image a whole organ in three dimensions (3D) at 1 micron XY sampling and 2 micron Z sampling in less than a day is enabled by the systems and methods described herein is poised to have a transformative effect on 3D histology and provide a crucial tool for researchers for a vast array of applications in neuroscience and other fields. The systems and methods of the present disclosure offer the highest imaging speed and sensitivity available for fluorescent subcellular whole organ imaging. Moreover the systems and methods of the present disclosure address several major problems with existing multi-foci multiphoton imaging technologies including, inter alia, problems of a limited field of view due to aberrations induced by the intermediate optics and problems with loss of emission photons in the descanned path.

More particularly, the systems and methods of the present disclosure may advantageously implement excitation methods that avoid aberrations and a restricted field of view as well as employing non-descanned detection that employ a high efficiency fiber coupled detection with an original interlaced scanning strategy that minimizes foci crosstalk. Thus, the systems and methods of the present disclosure can result in an 8-12 times increase in imaging speed over previous configurations. Moreover, the use of non-descanned detection results in an improved collection efficiency relative to previous configurations using descanned detection. Other advantages of the systems and methods of the present disclosure include large a field of view with minimal PSF aberration and high image signal-to-noise ratio (SNR), minimal crosstalk between neighboring foci even in the presence of scattering environments, support for multiple channels, for example multiple spectral channels (in some examples, there can be four (4) or more spectral channels, and in other examples, there can be up to sixteen (16) or more spectral channels), high pixel residence times, minimal photobleaching of out-of-focus regions, easy accommodation of larger organs, and suitability for both opaque and optically cleared samples.

Preferred embodiments employ automated control and data processing systems that are programmed to perform the sectioning and imaging operations described herein. Further preferred embodiments utilize imaging modalities such as coherent anti-stokes Raman scattering (CARS), stimulated Raman scattering (SRS), second harmonic imaging (SHG) and confocal reflectance microscopy. Consequently, multimodal imaging operations can be performed in conjunction with the systems and methods described herein.

## BRIEF DESCRIPTION OF THE DRAWINGS

Fig. 1 depicts an example multiphoton imaging system using a sequential sectioning process, according to the present disclosure.

Fig. 2 depicts example imaging systems wherein (i) a single foci is generated within an imaging plane and (ii) multiple foci are generated within an imaging plane, according the present disclosure.

Fig. 3 depicts an example multi-foci multiphoton imaging system including both non-descanning and descanning collection paths, according to the present disclosure.

Fig. 4A depicts the layout of an example multi-foci multiphoton imaging system, according to the present disclosure.

Fig. 4B depicts the layout of an example serial two-photon tomography microscope, according to the present disclosure.

Fig. 4C depicts an example excitation scheme for multi-foci multiphoton imaging wherein a foci generating element is downstream of a scanning element, according to the present disclosure.

Fig. 5 depicts a ZEMAX simulation of aberrations for each of (i) the configuration in Fig. 1 and (ii) the configuration in Fig. 3, according to the present disclosure.

Fig. 6 depicts an example coupling of a fluorescent signal into a liquid light guide (LLG), according to the present disclosure.

Fig. 7 depicts an example interlaced scanning strategy where contiguous regions are scanned sequentially, according to the present disclosure.

Fig. 8 depicts an example PMT assembly for four channel detection, according to the present disclosure.

Figs. 9A - 9B depict example layouts for detection of the disposition of a scanning mirror, according to the present disclosure.

Fig. 10A depicts an example of chromatic aberration that can occur from using a diffractive optical element, according to the present disclosure.

Fig. 10B depicts an example of optical elements with refractive indices $n1$, $n2$, $n3$ and Abbe numbers $v1$, $v2$, $v3$ that can be used to compensate for chromatic aberration, according to the present disclosure.

Figs. 11A - 11E depict example layouts of various types of detection configurations, according to the present disclosure.

Figs. 12A - 12C depict example layouts of additional types of detection configurations, according to the present disclosure.

## DETAILED DESCRIPTION

Multi-foci multiphoton imaging systems and methods are provided herein which advantageously implement excitation systems that avoid aberrations and the more restricted field of view of existing systems. Example systems according to the present disclosure can include a non-descanned detection system that employs high efficiency fiber coupled detection with interlaced scanning that reduces foci crosstalk.

Additional details regarding multiphoton imaging and systems for automated control and data processing of tissue such as whole organs are described in PCT Publication No. 2006/127967, filed May 25, 2006, and directed towards "Multifocal Imaging Systems And Methods." The present disclosure also builds upon and relates imaging, process control and data processing operations described in U.S. Publication No. 2013/0142413, filed December 26, 2012, and directed towards "Systems And Methods For Volumetric Tissue Scanning Microscopy." . These systems utilize automated sectioning of tissue in combination with spectroscopic imaging and detection to generate tissue atlases for later processing and image analysis.

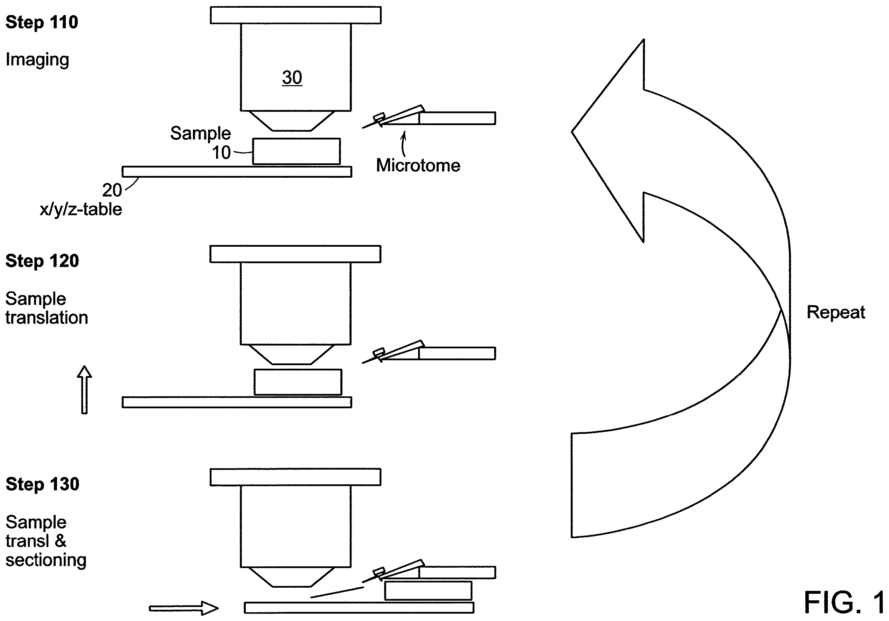

While two-photon excitation imaging can image several hundreds of microns in depth in scattering tissues, it cannot image through multiple centimeters to image entire opaque organs. For imaging a sequence of sections, a fixed agar-embedded mouse organ, is placed on an integrated x-y stage under the objective of a TPM system and imaging parameters are entered for automatic image acquisition. Once these are set, the instrument can advantageously work fully automatically. As depicted in Fig. 1, first, at step 110 the x-y-z stage 20 move the sample 10 under the objective 30 so that an optical section (or an optical z stack) is imaged as a mosaic of fields of view. Next the sample is translated (step 120) and a built-in vibrating blade microtome mechanically cuts off a sample section from the top of the sample 10 (step 130). The steps of overlapping optical (step 110) and mechanical (step 130) sectioning are then repeated serially while stepping through the sample (step 120) until a full dataset is collected for the sample. Thus, the organ imaging sequence steps down through the organ with enough overlap between adjacent slices for images from different layers to be coregistered. Notably, imaging the tissue before it is cut provides far greater fidelity and sidesteps complications of standard histological sectioning which images the tissue after it has been cut (and thus distorted).

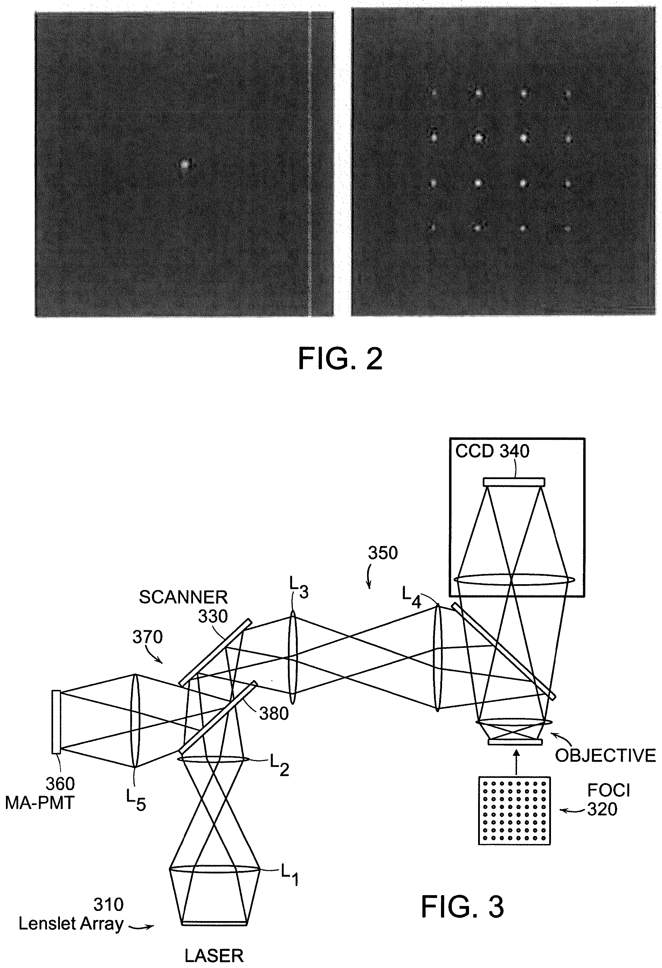

While sequential sectioning using TPM has proven robust, imaging speed can become a bottleneck for high-throughput applications due to the speed limitations of single point scanning. Various methods have been introduced to increase the acquisition speed. One solution is to scan a single foci quickly with a polygonal or resonant scanner. However this leads to short pixel dwell times with low numbers of photons/pixel and thus poor contrast. In the MMM approach a lenslet array or a diffractive optical element is used to generate multiple foci within the imaging plane. See, e.g., Fig. 2 depicting on the left single foci in a fluorescein solution and on the right a 4x4 array of foci. Advantageously, multiple foci can be scanned in parallel to increase the frame rate.

With reference to Fig. 3, a lenslet array 310 or diffractive optical element is used to generate multiple foci 320 within the imaging plane. In examples, these foci can be scanned (using scanning mirrors 330) in parallel and a CCD camera 340 or other detection means can be used to detect the fluorescent photons along a non-descanned path 350. However this method may present some limitations: when imaging turbid samples, the emission photons may scatter into neighboring CCD pixels and the imaging depth can become very restricted, often less than 50 microns.

With reference still to Fig. 3, one way of addressing the scattering issue, is to use a descanned detection configuration, for example, that employs a multi-anode photomultiplier tube (MA-PMT) detector 360, or other detector along a descanned path 370. The scanned foci 320 were directed back towards the MA-PMT detector 360 which may exhibit the same configuration as the foci (for example, an array of 4x4 foci directed towards a 4x4 multi-anode MA-PMT array). Fig. 3 illustrates the descanned geometry where the emission photons travel back along the same path 370 as the incoming laser light, and after passing the scanning mirrors 330, are split with a dichroic element 380 and directed towards the MA-PMT detector 360. With the large area of the each anode, the scattered emission photons are collected in the designated channels, and the scattering effect is suppressed resulting in high signal to noise ratio (SNR).

As described herein, a possible limitation of the descanned MMM system shown in Fig. 3 is that the imaging field of view is limited due to aberrations induced by the low f-number intermediate optics $L_1$, $L_2$, $L_3$, and $L_4$. In particular, after the excitation beam passes through the lenslet array 310, its diameter must be decreased in order to accommodate the small scan mirrors, and then re-expanded to overfill the back aperture of the objective lens. Thus, optics $L_2$ and $L_3$ of Fig. 3, in particular, have poor f-numbers though and generate large aberrations especially for edge foci. This can limit the final effective field of view. While larger size scanning mirrors are available to mitigate aberrations from the reduction and expansion, these mirrors typically lack sufficient bandwidth for fast scanning. In addition, larger separation between the scanning mirrors can generate non uniformity of excitation laser power over the whole scanning area.

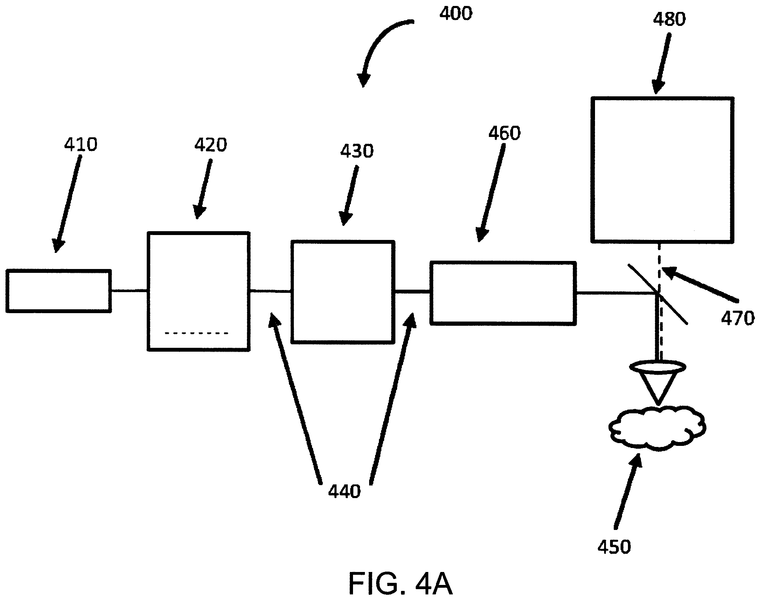

Fig. 4A shows a block diagram of a high speed serial tomographic microscope that can be used for nonlinear optical microscopy such as multi-photon, CARS and SHG microscopy. A preferred embodiment is directed to a multi-foci multiphoton imaging system 400, according to the present disclosure. As described herein, an example of a multi-foci multiphoton imaging system 400 can be configured as a high-speed serial two-photon tomographic microscope. The multi-foci multiphoton imaging system 400 includes a source 410 of electromagnetic radiation, a scanning element 420, and a foci generating element 430. The light excitation path 440 from the source 410 to a sample 450 includes the foci generating element 430 to generate a plurality of foci from an excitation beam and the scanning element to scans the foci across the sample 450. In the example of a multi-foci multiphoton imaging system 400, the foci generating element 430 receives light from the scanning element 420 along the light excitation path 440. One or more optical elements 460 can be disposed along the light excitation path 440. As also depicted in Fig. 4A, the light collection path 470 includes a detector 480 that detects fluorescence emissions from the sample 450. In the example of Fig. 4A, the layout of the multi-foci multiphoton imaging system 400 is split into operational units to reflect the modular nature of the microscope. According to the principles described herein, customized changes can be made to the individual operational units of the system with minimal adjustment to the remaining optics. The imaging system 400 can include automated computer controlled operation of the light source, scanner, detector, translation stage and other moveable or dynamic operational units to more efficiently conduct imaging of the tissue. A data processor is connected to the detector to process image data as described generally herein. The control system and data processor are operative in response to software stored in memory to automatically select imaging parameters and to perform image processing in accordance with selected preset processing operations described herein.

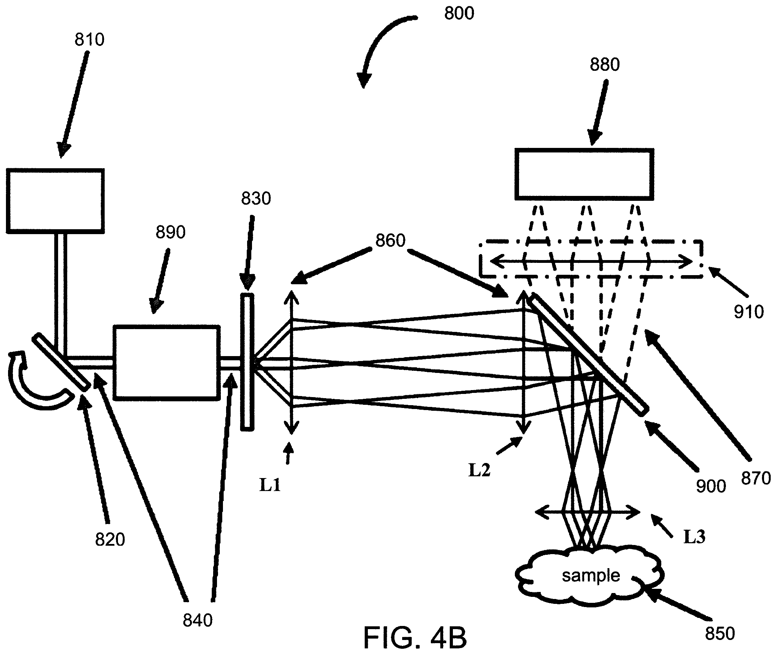

Fig. 4B shows a block diagram of an example multi-foci multiphoton imaging system 800 configured as a serial two-photon tomography microscope, according to the present disclosure. The multi-foci multiphoton imaging system 800 includes a source 810 of electromagnetic radiation, a scanning element 820, and a foci generating element 830. The light excitation path 840 from the source 810 to a sample 850 includes the foci generating element 830 to generate a plurality of foci from an excitation beam and the scanning element to scan the foci across the sample 850. In multi-foci multiphoton imaging system 800, the foci generating element 830 receives light from the scanning element 820 along the light excitation path 840. One or more optical elements 860 can be disposed along the light excitation path 840. As also depicted in Fig. 4B, the light collection path 870 includes one or more detectors 880 that detect fluorescence emissions from the sample 850. In the example of Fig. 4B, the layout of the multi-foci multiphoton imaging system 800 is split into operational units to reflect the modular nature of the microscope.

As shown in Fig. 4B, excitation light from the source 810 is incident on a scanning element 820 that is positioned appropriately such that it will deflect the beam and cause it to scan across the sample 850 in the lateral (x-y) plane. The non-limiting example of Fig 4B shows a single scanning element 820 that can be implemented to scan the light along a single dimension. In another example, at least two such scanning element 820 can be used for multi-dimensional scanning. The sample 850 may also be scanned in conjunction with the scan of the mirror of the example scanning element 820.

As also shown in Fig. 4B, the example multi-foci multiphoton imaging system 800 includes an optical relay 890. The excitation light can continue from the scanning element 820 through optical relay 890 that is configured to expand or shrink the beam of excitation light. The excitation light passes through a foci generating element 830 (configured as a beam-splitting device) that splits the incident light beam into multiple beams, each fanning out at an angle that may be determined by the user beforehand or in real-time. This beam-splitting device can be configured to be passive or active, to facilitate control of one or more of the fan-out angles, the number of foci, and whether each foci is turned ON (*i.e.,* to cause fluorescence emission at the sample) or OFF. In various examples, the foci generating element 830 can be many different types of beam-splitting elements, such as but not limited to a diffractive optical element, a holographic element, or a spatial light modulator. The beams of excitation light continue through the one or more optical elements 860 formed as an optical train (L1 and L2) that images the beam-splitting device on to the rear aperture of the objective L3. The beams of excitation light can pass through a dichroic 900 that separates the excitation light from the signal light. In this case, the dichroic reflects the excitation light towards the objective (L3) and the various beams are focused on to the sample. The signal can be generated from the foci as they are scanned along the sample 850 using the scanning element 820. The signal propagates back through objective L3 and passes through the dichroic 900 and detections optics 910 before being projected on to the one or more detectors 880.

The advantage of having multiple spots is that it speeds up the throughput of the system. This parallelization is of great benefit in the event of slow processes where the dwell time per pixel is long. Examples of such include phosphorescence or fluorescence lifetime imaging where the relaxation is on the order of milliseconds and the point scan of the large area will take too long. This is particularly important in situations where the expression of the desired proteins, and hence the fluorescence signal, is low.

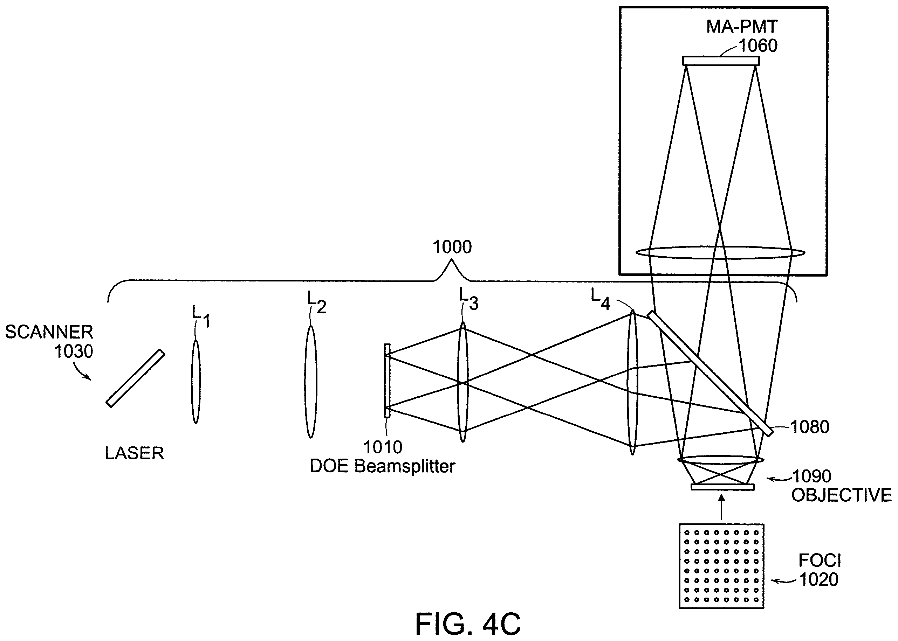

With reference to Fig 4C, an example excitation system 1000 is depicted that, similarly to the example systems of Figs. 4A and 4B, advantageously avoids the problems of poor f-numbers but still allows for small, fast mirrors as well as a non-descanned configuration. The excitation system 1000 advantageously places the scanning elements 1030 before the foci generating element 1010, depicted as a diffractive optical element (DOE) but may alternatively include a beam splitter or a lenslet array. The dichroic element 1080 is located between optic L4 and the objective lens 1090 so that the emission photons can reach the detector 1060 (depicted as a MA-PMT) via a relatively short path length.

Since the scanning elements 1030 are before the foci generating element 1010 in the excitation path, the laser beam diameter (~2.5 mm) can remain minimized, thus enabling the use of fast, small (less then 4mm and preferably about 3mm or less) scanning mirrors. Only after passing through the scanning mirrors, is the laser beam expanded to fill the foci generating element 1010 (maximum DOE diameter of 23 mm in the depicted example) using the lens pair $L_1$ and $L_2$ (forming a 4-f lens system in the depicted example). Note that, as depicted, the foci generating element 1010 is in a conjugate plane of the scanning elements 1030 and thus only the incident angle varies. After the foci generation element 1080 the laser beam is again expanded (using the second lens pair $L_3$ and $L_4$) to slightly overfill the back aperture of the objective lens 1090. With this gradual beam expansion, all the f-numbers stay in an acceptable range for the objective lens 1090 in question.

To illustrate, Table 1 compares the f-numbers of the optics in Fig. 3 versus the optics in Fig 4C that can be used to achieve a full field of view (1 mm diameter at a sample plane) of a 20× objective lens (W Plan-Apochromat, 1.0 NA, Zeiss, Thornwood, New York), which provides about 800 $\mu$m × 800 $\mu$m scanning area. Generally an f-number of at least 10 is recommended for a singlet lens and greater than 5 for a doublet lens. For the configuration in Fig. 3, the optics require two very low f-numbers (lens elements $L_2$ and $L_3$) which results in greater aberrations. In contrast, the lowest f-numbers for the configuration in Fig. 3 is 5.9 where $L_1$ is a theta lens, which can easily afford an f-number of 5.9, and $L_3$ is a doublet.

| TABLE 1 | f - numbers | | | |
|---|---|---|---|---|
| **Lens Element** | **L1** | **L2** | **L3** | **L4** |
| Figure 3P | 7.0 | 2.3 | 2.0 | 5.7 |
| Figure 1 | **5.9** | **7.9** | **5.9** | **7.6** |

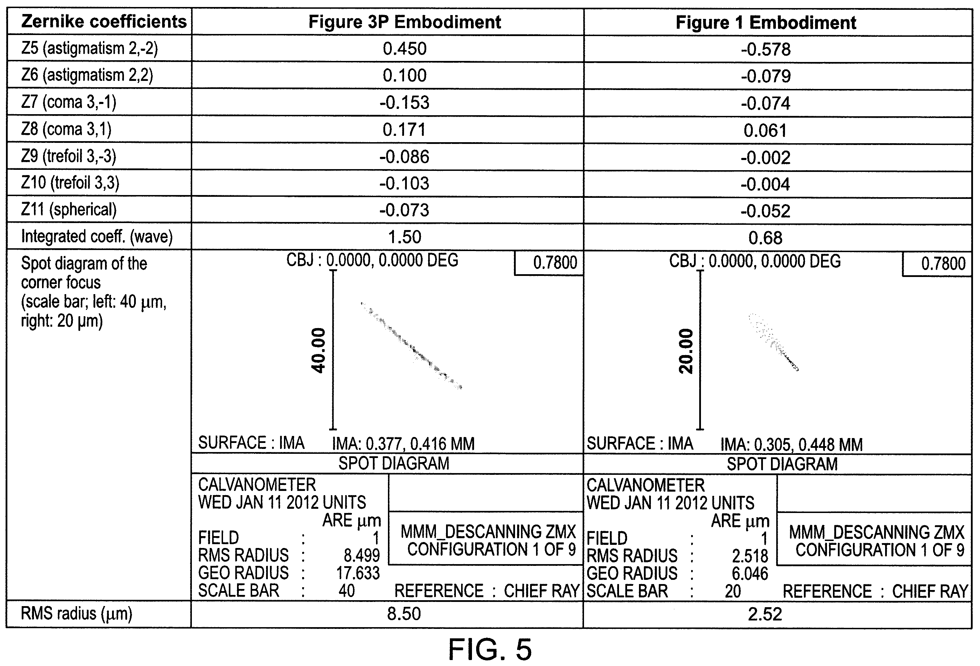

In Fig. 5 an initial ZEMAX simulation is presented showing that the configuration in Fig 4C offers significantly lower aberrations than the configuration in Fig. 3. Advantageously, the geometry of Fig 4C avoids low f-numbers and generates less aberration. The aberration coefficients were calculated and spot diagrams were simulated. With the improved aberration coefficients, the root mean square (RMS) radius becomes smaller by over a factor of 3, resulting in much more effective two-photon excitation. Note that this simulation was done for the worst case of a corner foci of an 8x8 array. Further improvements can be realized with aspheric optical components.

Turning to the emission path, as noted herein, one difficulty with non-descanned detection is that the fluorescence signal is no longer stationary at the image plane. While the translation of the signal (resulting from the translation of the foci) on the image plan is easily accounted for when using CCD or CMOS imaging devices, a greater problem is presented for PMT and MA-PMT detection. Even though each anode of the MA-PMT has a relatively large area, as the foci are scanned in the object plane of the objective, it is possible for emission photons to scatter into neighboring MA-PMT pixels in the image plane, particularly near the edge of a PMT pixel. Further, MA-PMTs have dead regions surrounding each pixel which, if uncorrected, lead to blank areas in the image. This can be dealt with in principle by placing a lenslet array or array of non-imaging collectors to help keep the fluorescence focused on the center portion of the PMT pixel. However, it is still less than ideal since it does not prevent optical crosstalk from scattering photons and electronic crosstalk from the MA-PMT. More troublesome for ex vivo whole organ imaging, where high photon fluxes are to be expected, is that MA-PMT devices have the same current limit as a single PMT, but this current limit must now be spread amongst several foci. Thus, detector saturation becomes a real issue.

To solve all these issues example systems and methods implement detection which (i) can utilize interlaced regional scanning to remove optical crosstalk and (ii) utilize fiber optic coupling of the detected light on a per foci basis allowing for use of a single PMT per foci. Advantageously, the fiber optics overcome steric constraints. Moreover, the detection system results in a substantial reduction in optical crosstalk and elimination of detector electronic crosstalk and dead space. Collection efficiency is also increased (collection efficiency actually surpasses normal air coupled detection) and better spectral discrimination is achieved due to randomization of the light after passing thru the light guides. The use of fiber optics also allows for high modularity and convenient placement of detectors off the imaging unit itself. Finally, since this detection system enables using a single PMT per foci per spectral channel, MA-PMT current saturation is no longer a concern.

Fiber coupling of a fluorescence signal in a TPM system has traditionally been viewed as inefficient compared to air coupled detection. However, large core fiber-optic fluorescence detection with high numerical aperture (NA), low magnification objectives, shows substantial improvement in collection efficiency over traditional air coupled detections schemes. See, e.g., Mathieu Ducros et al., "Efficient Large Core Fiber-based Detection for Multi-channel Two-photon Fluorescence Microscopy and Spectral Unmixing," Journal of Neuroscience Methods 198, no. 2 (June 15, 2011): 172-180, doi:10.1016/j.jneumeth.2011.03.015. Specifically, by placing a fiber optic near an objective, and making use of AR coatings and immersion oil coupling to reduce index mismatches, high collection efficiencies are achievable that have a 7X improvement over the standard air coupled path. Moreover, due to mode scrambling within the fiber, spatial non-homogeneity detection sensitivity cancels itself out leading to improved spectral discrimination. Fibers utilizing an AR coating and immersion oil coupling are also referred to herein as liquid light guides (LLGs).

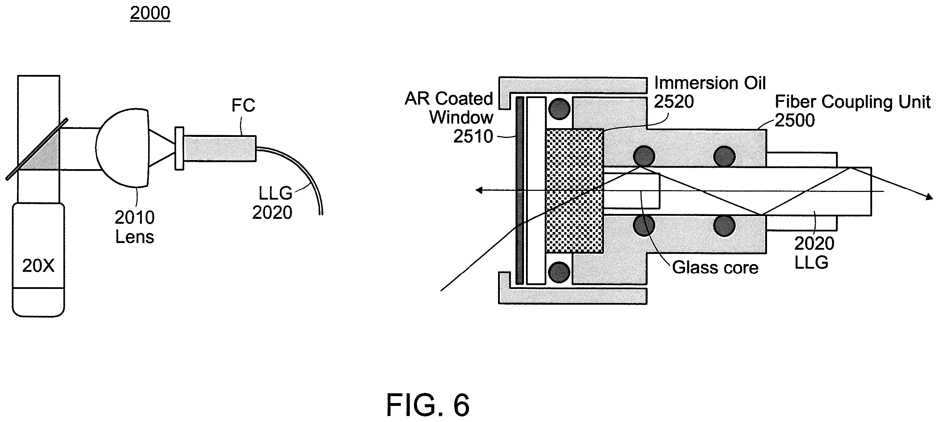

Fig. 6 depicts an example coupling of a fluorescent signal into a liquid light guide (LLG). **In** particular, on the left an example emission path optical layout 2000 is depicted wherein a lens 2010 focuses emitted light onto the liquid light guide (2020). A detailed depiction of a liquid light guide interface 2500 is depicted on the right. In particular, the interface includes an AR coated window 2510 interfaced to oil 2520 which index matches to the input of the LLG 2020. Losses were shown to be less than 0.4%.

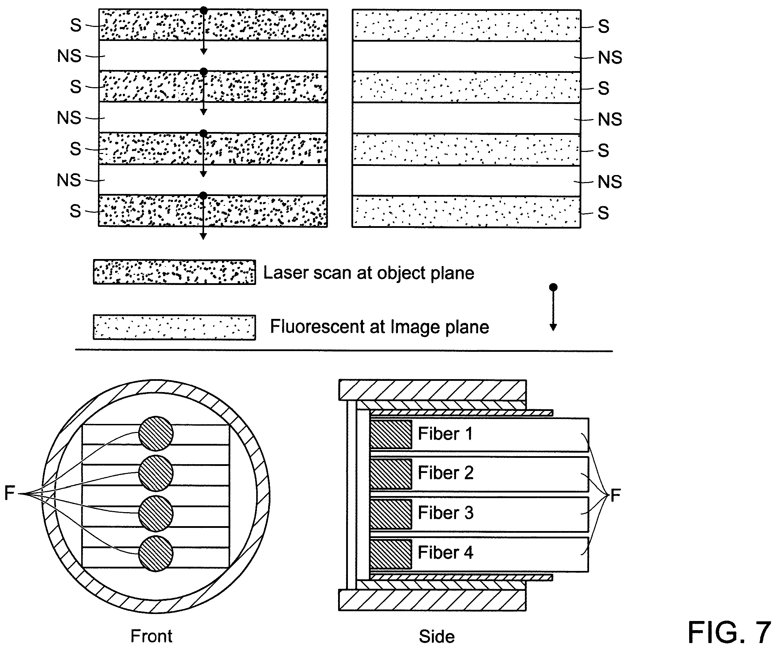

Systems and methods of the present disclosure may advantageously implement an interlaced scanning method that enables coupling a 1xN arrangement of foci into 1xN array of fibers, for example, LLGs. Fig. 7 demonstrates an example interlaced scanning strategy where contiguous regions are scanned sequentially either through the use of an additional movable mirror in the emission path to reposition the emission photons onto the LLGs foci, or by physically translating the sample under the objective. Since each individual interlaced scan takes half the time, there is little performance degradation in interlacing the scan. This strategy reduces photon scattering cross talk, and provides steric space to place the LLGs. As depicted, regions S represents the regions currently scanned in the object plane of the objective while regions NS represent regions which were previously or are subsequently scanned. Note that the fibers F are purposely larger than the chosen scan region S in order to better capture scattered photons.

As can be seen from Fig. 7, the fibers F cover the scan region in the horizontal, slow axis Y-scan, direction, but not the fast X scan direction. An approach is to demagnify/focus the image in the X direction. This can be done by using cylindrical lens in the emission path. For instance, when coupling an Olympus 20X 1.0 NA lens, which has a front focal length of 9mm, with a 200mm tube lens, the system generates an image height of 17.6 mm. Each individual scan has a 2.5mm height, for example. A fiber with a 4 mm core and center can be employed on each scan region. To demagnify the X-scan, a doublet of two cylindrical lenses having an 80mm focal length (effective focal length of 40 mm) can be used to obtain a demagnification of 5, giving the x-axis a linear extent of 17.6mm/5 = 3.5 mm, which can fit within the 4mm light guide input. Note that while in the depicted examples, a single lens (cylindrical doublet) is used to focus all foci at once onto a single fiber optic assembly it is also possible to use rectangular cylindrical lens or mirrors angled such that the fluorescent from each foci is independently focused onto each fiber, for example, to allow wide flexibility in magnification and placement of the fibers and downstream optics.

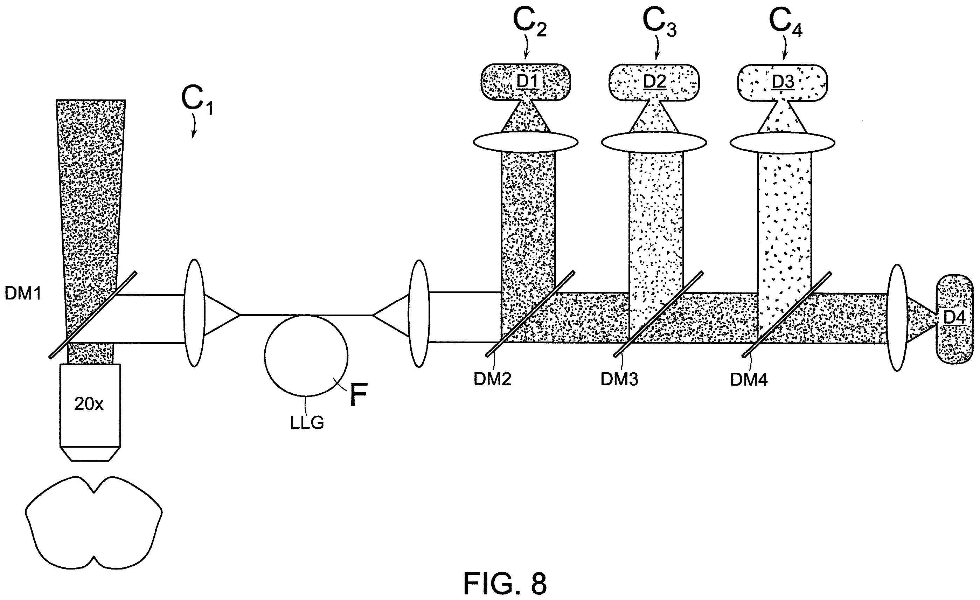

Fig. 8 illustrates an example PMT assembly for four channel detection ($C_1$, $C_2$, $C_3$ and $C_4$) from a single fiber F. Due to the mode scrambling within the fiber F, the output of the fiber F is independent of the input incidence angle, and is spectrally split into 4 PMTs. For example, light was split at 620, 580, 540, and 500 nm to provide four channel detection at these wavelengths.

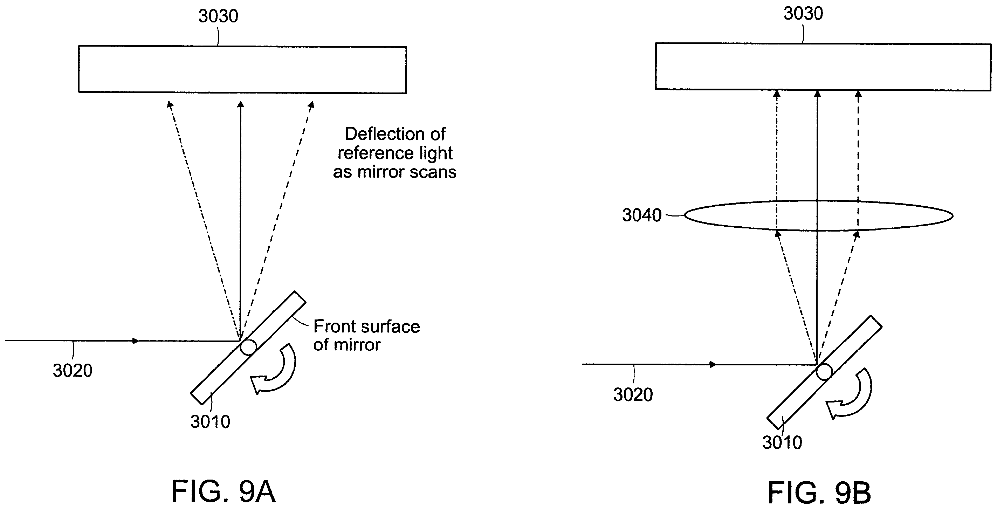

As shown in Figs. 9A and 9B, any example scanning element according to the present disclosure, including any one or more of scanning elements 420, 820 or 1030, can include one or more scanning mirrors 3010 to facilitate the scanning of the foci across the sample. The disposition of the scanning mirrors (including position or orientation) should be known, as they are subject to mechanical errors that can affect the reconstruction of the image. In an example, the disposition of the one or more scanning mirrors 3010 (such as position and/or orientation) can be determined using a beam 3020 of a laser that is directed at the rear of the scanning mirror(s), where the front surface of the one or more scanning mirrors 3010 is in the excitation light path described hereinabove. The deflection of the beam 3020 can be detected using a sensor 3030. The detector of the sensor 3030 is large enough to accommodate the translation of the beam 3020 as it is deflected off the one or more scanning mirrors 3010. The detector also can be configured to have a sufficiently high resolution (such as, but not limited to, a CCD or a linear CCD) to determine the position of the beam. Fig. 9A illustrates the deflection of the beam 3020 that can occur as the one or more scanning mirrors 3010 perform the scan. In the example of Fig. 9B, a lens may be used to focus down the beam 3020 and improve the detection of the position of the one or more scanning mirrors 3010.

In any example implementation of a system herein, the foci generating element can be a diffractive optical element. A diffractive optical element works by diffracting light into the desired orders and may be used as a beam-splitting element. A diffractive optical element, however, can be sensitive to the wavelength of light that is incident upon it. In general, the diffracted angle follows the grating equation:

$$\sin\theta_d = m\lambda G - \sin\theta_i$$

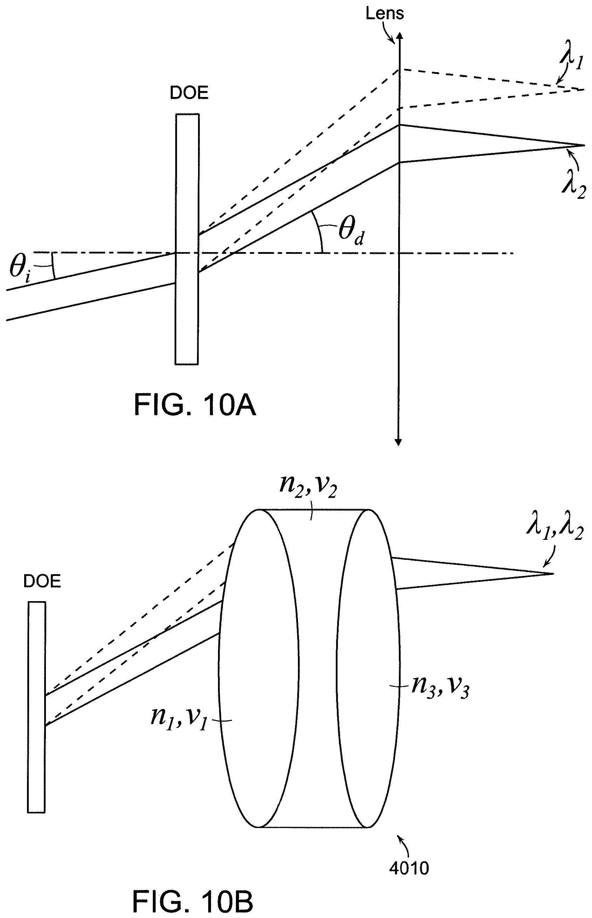

where $\theta_i, \theta_d$ are the incident and diffracted angles, respectively, $m$ is the diffraction order, $\lambda$ is the wavelength of the incident light, and G is the grating constant that is a measure of the grating frequency. Fig. 10A illustrates the chromatic aberration that can occur as a result of using an example diffractive optical element (DOE) and without any chromatic correction optics. The wavelength dependence of the diffracted angle can lead to chromatic aberrations. Correction for this aberration can facilitate better performance of the system and provide better images, because (i) the image resolution may not be uniform throughout the image but can decrease towards the edges of the image due to aberrations; (ii) the efficiency of the two-photon excitation decreases as a result of dispersion at the focus; and (iii) to ensure that it is possible to perform co-localization analysis when using multiple wavelengths (such as but not limited to 800nm and 1064nm), or in situations where the overlap of the excitation beams are a factor (for example, in Coherent Anti-Stokes Raman Scattering (CARS), pump-probe spectroscopy, SRS and/or sum-frequency generation).

Example multi-foci multiphoton imaging systems are provided herein that are configured to compensate for chromatic aberration to maximize the resolution. In an example, one or more optical elements can be used along the excitation light path, where the one or more optical elements introduce chromatic dispersion equal and opposite to that produced by the diffractive optical element. **In** an example, the one or more optical elements can be configured through the careful selection of optical power and glass types in the intermediate optics between the diffractive optical element and the objective. As an example, Fig. 10B depicts an example of the use of one or more optical elements 4010 (such as but not limited to different glass types) with refractive indices $n1, n2, n3$ and Abbe numbers $v1, v2, v3$ to compensate for the chromatic aberration. The different dispersion and optical powers of the one or more optical elements 4010 reduce or eradicate the chromatic aberration such that all colors can overlap at the foci.

Example multi-foci multiphoton imaging systems are provided herein that can be configured to perform reflection confocal microscopy. An added component can be used to allow for the system to perform reflection confocal microscopy. Reflection confocal microscopy works by detecting the reflected light from the sample. This may be done by picking off the reflected light coming back through the system. An multi-foci multiphoton imaging system with this modification may be used for reflection confocal microscopy or for detecting the surface of the sample.

In an example implementation according to the present disclosure, the example multi-foci multiphoton imaging system can be configured with a plurality of detector elements. For example, in the example multi-foci multiphoton imaging system 800 of Fig. 4B, the one or more detectors 880 can be a plurality of detector elements. Similarly to as described in connection with Figs. 4A - 4C, the light excitation path includes a foci generating element that generates a plurality of foci from an excitation beam and a scanning element that scans the foci across a sample, the foci generating element receiving light from the scanning element along the excitation pathway, as depicted in Fig. 4B. In this example implementation, the light collection path can include a plurality of detector elements that detect fluorescence emissions from the sample and a plurality of collection optical elements, where each collection optical element of the plurality of collection optical elements couples the emitted fluorescence light to each detector element of the plurality of detector elements. As a non-limiting example, the detection optics 910 can include optical lenses that focus the signal from the foci on to the detector elements. The detector elements may be a 1-D or 2-D array of individual detectors, such as but not limited to a multi-anode photomultiplier tube that receives the signal and provide an output to form the image. As a non-limiting example, the example multi-foci multiphoton imaging system can be configured such that each foci is mapped to a respective detector element.

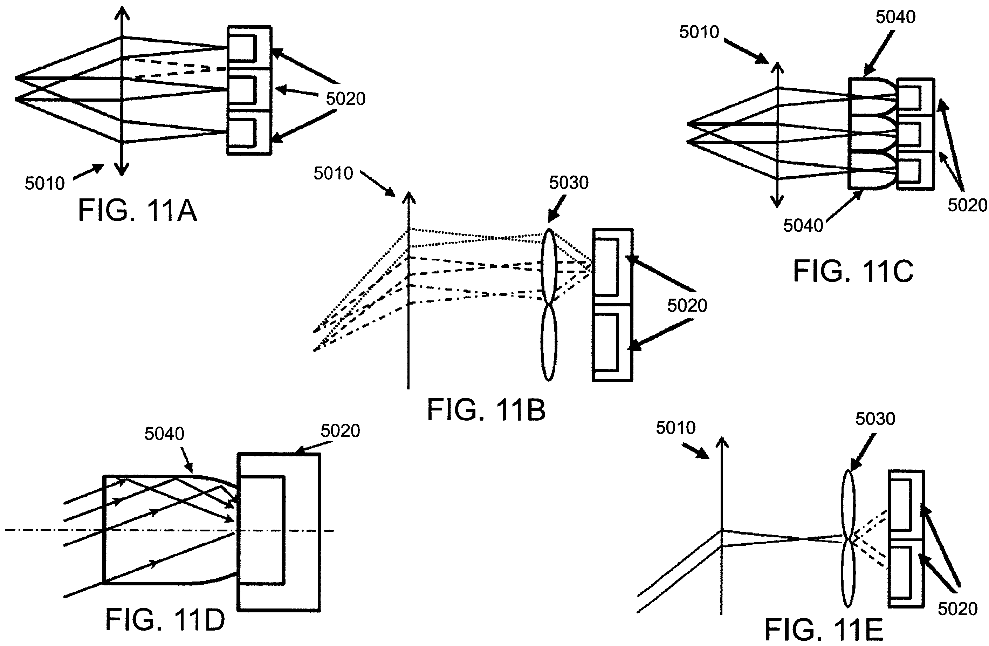

Figs. 11A - 12C depict various example configurations where an example multi-foci multiphoton imaging system includes a plurality of detector elements and a plurality of collection optical elements.

Figs. 11A - 11E show examples of various types of detection modes. In the example of Fig. 11A, the detection optics 5010 are configured to focus the signal on to the various detector elements 5020. The detection optics 5010 and the detector elements 5020 are configured and arranged such that each foci scans within the active area of the detector elements 5020. In cases where the scan range of each individual foci can exceed the active area of the detector (dotted lines), the sample may be scanned to account for the inactive regions of the detector elements 5020 or the detector elements 5020 may be shifted.

Fig. 11B shows another example configuration where the plurality of collection optical elements are in a lenslet array 5030 that is positioned at about one focal length before the detector elements 5020 and the detection optics 5010, so that the signal substantially does not move as the foci scans.

Fig. 11C shows another example configuration where the plurality of collection optical elements are a plurality of light collectors 5040 positioned behind the detection optics 5010 and in front of the detector elements 5020, such as shown. As shown in Fig. 11D, a light collector 5040 can be configured such that any light that enters the light collector 5040 (as shown in the illustrated light path) is redirected towards the exit aperture and therefore the active region of a respective detector element 5020, regardless of the input angle as long as it enters within a particular acceptance angle of the light collector 5040. For a given light collector 5040, this acceptance angle may be specified such that the light collector 5040 collects all the scattered signal photons and hence improve the signal to noise ratio of the example multi-foci multiphoton imaging system.

Fig. 11E shows an example of what may happen when the beam of fluorescence emitted light scans across the interface of the collection optics (illustrated as a lenslet array in this example). Signal can gets scattered into the adjacent detectors and this can results in cross-talk between detectors and ghost images. In an example implementation, a combination of stage and beam scanning may be done such that the beam is not scanned across an interface and the sample is then shifted to accommodate the unscanned sample regions (*i.e.,* the sample is shifted such that the foci can illuminate those unscanned sample regions). Alternatively, the ghost images may be accounted for and removed during the post-processing phase using various processing software.

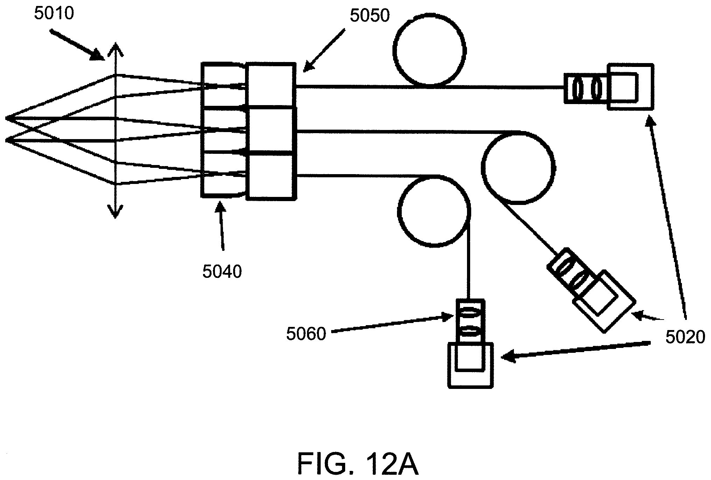

Figs. 12A - 12C depict other example configurations where an example multi-foci multiphoton imaging system includes a plurality of detector elements and a plurality of collection optical elements.

Fig. 12A shows an example multi-foci multiphoton imaging system where a light guide 5050 is positioned in the light collection path after the detection optics 5010 and after each of the light collectors 5040, to channel the signal with little loss to a respective detector element 5020 placed some distance away. As also shown in Fig. 12A, one or more collection optics 5060 may be positioned at the exit port of each respective light guide 5050. This example configuration allows for a modular approach to improvements or replacement of the detection system.

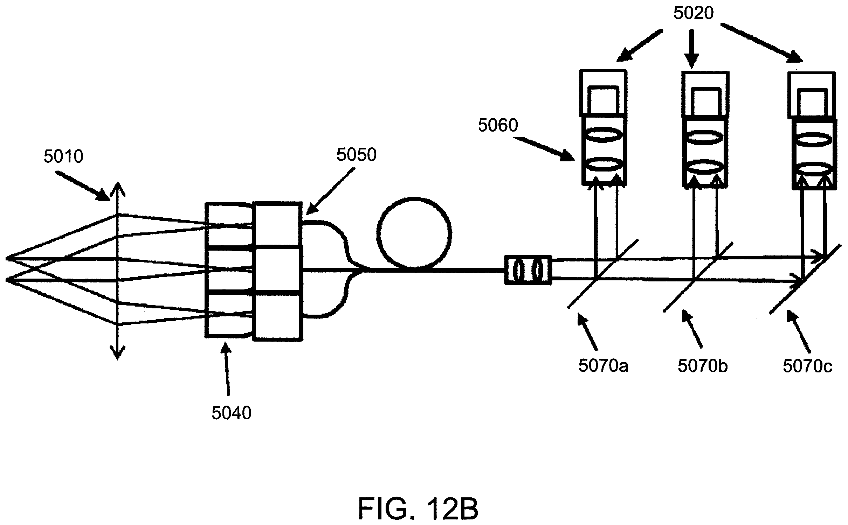

Fig. 12B shows an example multi-foci multiphoton imaging system where a light guide 5050 is positioned in the light collection path after the detection optics 5010 and after each of the light collectors 5040, to channel the signal with little loss to detector elements 5020 placed some distance away. One or more collection optics 5060 may be positioned at the exit port of each respective light guide 5050. As also shown in Fig. 12B, one or more dichroic filters (5070a, 5070b, and 5070c) may be positioned such that multiple channels may be used for the detection of different fluorophores.

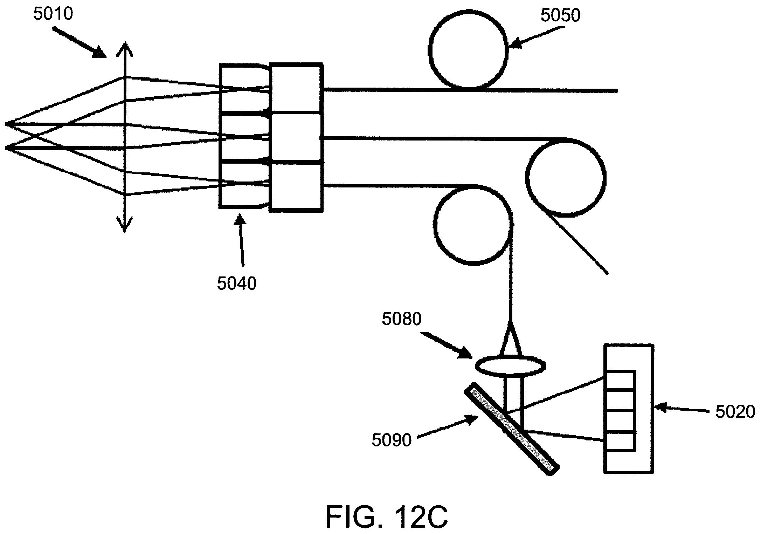

Fig. 12C shows an example multi-foci multiphoton imaging system where a light guide 5050 is positioned in the light collection path after the detection optics 5010 and after each of the light collectors 5040, to channel the signal with little loss to detector elements 5020 placed some distance away. Fig 12C shows an example spectral detection system that is possible with the use of light guides and light collectors. Signal is collected and channeled to the detector using light guide 5050. An optical component 5080 (that can be at least one of a collimating lens and a mirror) may be placed at the exit port of the light guide to collimate the signal beam and to direct the signal light on to a dispersive element 5090 (such as but not limited to a diffraction grating or a prism). This disperses the signal spectrally and the signal can be detected by a detector element, such as but not limited to a multi-anode PMT or a line CCD. As described in connection with the example of Fig 12B, dichroic mirrors may be used to create spectral detection for each channel. In general, the non-descanned detection system is effective because of the shorter path lengths involved. Scattered light signals are collected more efficiently with larger collection optics and detectors. This is important for imaging of biological samples as they are typically highly scattering. It is also useful in detecting second-harmonic generated signals as SHG is primarily forward directed while the detected signals are mostly due to the back scattered SHG signal.

While the systems and methods of the present disclosure have been particularly shown and described with reference to the example embodiments and figures set forth herein, it will be understood by those skilled in the art that various changes in form and details may be made therein without departing from the scope of the invention, as defined by the appended claims. Thus, the systems and methods of the present disclosure are not limited to the example embodiments and figures.

## Claims

1. A multi-foci multiphoton imaging system (400) comprising:
   a microscope imaging system having a multiphoton light source, a light excitation path to couple a plurality of foci onto a sample to be imaged and a plurality of photomultiplier tube (PMT) detector elements (480) to detect light collected from the sample along a light collection path that includes a plurality of light collection optical elements that couple light to the plurality of PMT detector elements that each detect fluorescence from respective foci of the plurality of foci, the light excitation path including a foci generating element (430) that receives an excitation beam of light from the light source and generates the plurality of foci, the microscope imaging system further **characterized by**:

   a light scanning device (420) including a first scanning element that scans the foci across the sample in a slow scan direction and a second scanning element that that scans the foci across the sample (450) in a fast scan direction, the foci generating element (430) and the light scanning device (420) receiving light from the multiphoton light source that is coupled along the light excitation pathway (440) onto the sample (450), the light scanning device operating in response to computer control to perform x-y scanning of the sample with the plurality of foci, and wherein the light collection path includes a movable mirror to couple light from the plurality of foci in the sample to the plurality of light collection optical elements.

2. The system of claim 1, wherein the plurality of PMT detector elements (480) comprises a multi-anode photomultiplier tube (MA-PMT).

3. The system of claim 2,

   wherein a plurality of optical fibers couple the collected light to the MA-PMT and, preferably, each of the plurality of optical fibers is interfaced with a plurality of channels of the MA-PMT to detect a plurality of spectral channels; and/or

wherein the plurality of optical fibers include one or more liquid light guides (2020) and, preferably, each of the plurality of optical fibers are adapted to collect light from foci that scan a plurality of adjacent regions to form an interlacing scan of the sample, wherein, preferably, the interlacing scan of the sample reduces crosstalk between MA-PMT channels.

4. The system of claim 1, wherein the multiphoton light source comprises a laser.

5. The system of claim 1, further comprising a tissue sectioning device, and/or

   a data processor that receives spectral data from the plurality of PMT detector elements, and/or
   a position detection system coupled to the light scanning device, to detect at least one of: a position of at least one of the scanning elements and an orientation of at least one of the scanning elements, and/or
   an optical element disposed in the light excitation path to receive light from the foci generating element, the optical element introducing a chromatic dispersion that is opposite to that of the foci generating element.

6. The system of claim 1, wherein the plurality of PMT detector elements (480) detect a plurality of different wavelengths.

7. The system of claim 1, wherein the light collection path (470) further includes a lenslet array, the plurality of PMT detector elements (480) receiving fluorescence emissions from the lenslet array, or wherein the plurality of light collection optical elements are a plurality of light collectors (5040) positioned in front of the PMT detector elements (480).

8. A method of imaging a sample comprising operating a microscope imaging system including a multiphoton light source, a foci generating element coupled to a lens that generates a plurality of foci to be scanned across a sample, a plurality of light collection optical elements that couples light emitted by the sample at each of the plurality of foci to a plurality of PMT detector elements that each detect respective foci of the plurality of foci, the method further comprising:

   generating a plurality of foci with a foci generating element (430) that receives light from a multiphoton light source;
   scanning the plurality of foci across the sample with a first scanning element that scans in a slow scan direction and with a second scanning element that scans in a fast scan direction, the first scanning element and the second scanning element operating in response to a controller;
   collecting fluorescence light from the plurality of foci with the plurality of collection optical elements, wherein a movable mirror couples light from the plurality of foci in the sample to the plurality of collection optical elements; and
   detecting the collected fluorescence light with the plurality of PMT detector elements (480) that are coupled to the plurality of collection optical elements to generate an image of the sample.

9. The method of claim 8 wherein the multiphoton light source comprises a laser, and/or
   wherein the collection optical elements comprise a plurality of optical fibers or wherein the optical fibers comprise a plurality of liquid light guides (2020).

10. The method of claim 8 wherein the plurality of detector elements detect a plurality of different wavelengths.

11. The method of claim 8 wherein the first and second scanning elements perform an interlaced scan of the foci across the sample.

12. The method of claim 8 further comprising processing spectral data from the plurality of detector elements with a data processor, and/or

    sectioning the tissue with a tissue sectioning device, and/or
    collecting light from the sample with a lenslet array in a light collection path.

13. The method of claim 8 wherein the plurality of collection optical elements further comprises a plurality of optical fibers that collect light from corresponding foci in the sample.

**Patentansprüche**

1. Multifokales Multiphoton-Bildgebungssystem (400), umfassend:
   ein Mikroskop-Bildgebungssystem, aufweisend eine Multiphoton-Lichtquelle, einen Lichtanregungspfad zum Koppeln einer Vielzahl von Brennpunkten auf eine abzubildende Probe und eine Vielzahl von Photomultiplier-Röhren- (PMT-) Detektorelementen (480) zum Erfassen von Licht, das von der Probe entlang eines Lichtsammelpfads gesammelt wird, der eine Vielzahl von optischen Lichtsammelelementen einschließt, die Licht auf die Vielzahl von PMT-Detektorelementen koppeln, die jeweils Fluoreszenz von entsprechenden Brennpunkten der Vielzahl von Brennpunkten erfassen, wobei der Lichtanregungspfad ein Brennpunkte erzeugendes Element (430) einschließt, das einen Anregungslichtstrahl von der Lichtquelle empfängt und die Vielzahl von Brennpunkten erzeugt, wobei das Mikroskop-Bildgebungssystem weiter **gekennzeichnet ist durch**:

eine Lichtabtastvorrichtung (420), einschließend ein erstes Abtastelement, das die Brennpunkte in einer langsamen Abtastrichtung über die Probe abtastet, und ein zweites Abtastelement, das die Brennpunkte in einer schnellen Abtastrichtung über die Probe (450) abtastet, wobei das Brennpunkte erzeugende Element (430) und die Lichtabtastvorrichtung (420) Licht von der Multiphoton-Lichtquelle empfangen, die entlang des Lichtanregungspfads (440) auf die Probe (450) gekoppelt ist, wobei die Lichtabtastvorrichtung als Reaktion auf eine Computersteuerung arbeitet, um ein x-y-Abtasten der Probe mit der Vielzahl von Brennpunkten durchzuführen, und

wobei der Lichtsammelpfad einen beweglichen Spiegel einschließt, um Licht von der Vielzahl von Brennpunkten in der Probe auf die Vielzahl von optischen Lichtsammelelementen zu koppeln.

2. System nach Anspruch 1, wobei die Vielzahl von PMT-Detektorelementen (480) eine Multianoden-Photomultiplier-Röhre (MA-PMT) umfasst.

3. System nach Anspruch 2,

wobei eine Vielzahl von optischen Fasern das gesammelte Licht auf die MA-PMT koppelt, und vorzugsweise, wobei jede der Vielzahl von optischen Fasern über eine Schnittstelle mit einer Vielzahl von Kanälen der MA-PMT verbunden ist, um eine Vielzahl von Spektralkanälen zu erfassen; und/oder

wobei die Vielzahl von optischen Fasern einen oder mehrere Flüssigkeitslichtleiter (2020) einschließt, und vorzugsweise, wobei jede der Vielzahl von optischen Fasern angepasst ist, um Licht von Brennpunkten zu sammeln, die eine Vielzahl von angrenzenden Regionen abtasten, um eine Verschachtelungsabtastung der Probe zu bilden, vorzugsweise, wobei die Verschachtelungsabtastung der Probe das Übersprechen zwischen MA-PMT-Kanälen reduziert.

4. System nach Anspruch 1, wobei die Multiphoton-Lichtquelle einen Laser umfasst.

5. System nach Anspruch 1, weiter umfassend eine Gewebeabtrennvorrichtung, und/oder

einen Datenprozessor, der Spektraldaten von der Vielzahl von PMT-Detektorelementen empfängt, und/oder

ein mit der Lichtabtastvorrichtung gekoppeltes Positionserfassungssystem, um mindestens eines zu erfassen von: einer Position von mindestens einem der Abtastelemente und eine Ausrichtung von mindestens einem der Abtastelemente, und/oder

ein optisches Element, das in dem Lichtanregungspfad angeordnet ist, um Licht von dem Brennpunkte erzeugenden Element zu empfangen, wobei das optische Element eine chromatische Dispersion einführt, die der des Brennpunkte erzeugenden Elements entgegengesetzt ist.

6. System nach Anspruch 1, wobei die Vielzahl von PMT-Detektorelementen (480) eine Vielzahl unterschiedlicher Wellenlängen erfasst.

7. System nach Anspruch 1, wobei der Lichtsammelpfad (470) weiter eine Linsenanordnung einschließt, die Vielzahl von PMT-Detektorelementen (480) Fluoreszenzemissionen von der Linsenanordnung empfängt, oder
wobei die Vielzahl von optischen Lichtsammelelementen eine Vielzahl von Lichtkollektoren (5040) ist, die vor den PMT-Detektorelementen (480) angeordnet sind.

8. Verfahren zum Abbilden einer Probe, umfassend Betreiben eines Mikroskop-Bildgebungssystems, einschließend eine Multiphoton-Lichtquelle, ein Brennpunkte erzeugendes Element, das mit einer Linse gekoppelt ist, die eine Vielzahl von über eine Probe abzutastenden Brennpunkten erzeugt, eine Vielzahl von optischen Lichtsammelelementen, die von der Probe an jedem der Vielzahl von Brennpunkten abgegebenes Licht auf eine Vielzahl von PMT-Detektorelemente koppelt, die jeweils entsprechende Brennpunkte der Vielzahl von Brennpunkten erfassen, das Verfahren weiter umfassend:

Erzeugen einer Vielzahl von Brennpunkten mit einem Brennpunkte erzeugendes Element (430), das Licht von einer Multiphoton-Lichtquelle empfängt;
Abtasten der Vielzahl von Brennpunkten über die Probe mit einem ersten Abtastelement, das in einer langsamen Abtastrichtung abtastet, und mit einem zweiten Abtastelement, das in einer schnellen Abtastrichtung abtastet, wobei das erste Abtastelement und das zweite Abtastelement als Reaktion auf eine Steuereinheit arbeiten;
Sammeln von Fluoreszenzlicht von der Vielzahl von Brennpunkten mit der Vielzahl von optischen Sammelelementen, wobei ein beweglicher Spiegel Licht von der Vielzahl von Brennpunkten in der Probe auf die Vielzahl von optischen Sammelelementen koppelt; und Erfassen des gesammelten Fluoreszenzlichts mit der Vielzahl von **PMT-**Detektorelementen (480), die mit der Vielzahl von optischen Sammelelementen gekoppelt ist, um ein Bild der Probe zu erzeugen.

9. Verfahren nach Anspruch 8, wobei die Multiphoton-Lichtquelle einen Laser umfasst, und/oder wobei die optischen Sammelelemente eine Vielzahl von optischen Fasern umfassen oder wobei die optischen Fasern eine Vielzahl von Flüssigkeitslichtleitern (2020) umfassen.

10. Verfahren nach Anspruch 8, wobei die Vielzahl von Detektorelementen eine Vielzahl unterschiedlicher Wellenlängen erfasst.

11. Verfahren nach Anspruch 8, wobei das erste und das zweite Abtastelement eine verschachtelte Abtastung der Brennpunkte über die Probe durchführen.

12. Verfahren nach Anspruch 8, weiter umfassend Verarbeiten von Spektraldaten von der Vielzahl von Detektorelementen mit einem Datenprozessor, und/oder

Abtrennen des Gewebes mit einer Gewebeabtrennvorrichtung, und/oder Sammeln von Licht von der Probe mit einer Linsenanordnung in einem Lichtsammelpfad.

13. Verfahren nach Anspruch 8, wobei die Vielzahl von optischen Sammelelementen weiter eine Vielzahl von optischen Fasern umfasst, die Licht von entsprechenden Brennpunkten in der Probe sammeln.

**Revendications**

1. Système (400) d'imagerie multiphotons à foyers multiples comprenant :
un système d'imagerie à microscope présentant une source de lumière multiphotons, un chemin d'excitation de lumière pour coupler une pluralité de foyers sur un échantillon à imager et une pluralité d'éléments détecteurs (480) à tube photomultiplicateur (PMT) pour détecter la lumière collectée depuis l'échantillon le long d'un chemin de collecte de lumière qui inclut une pluralité d'éléments optiques de collecte de lumière qui couplent la lumière à la pluralité d'éléments détecteurs à PMT qui détectent chacun une fluorescence depuis des foyers respectifs de la pluralité de foyers, le chemin d'excitation de lumière incluant un élément (430) de génération de foyers qui reçoit un faisceau de lumière d'excitation provenant de la source de lumière et génère la pluralité de foyers, le système d'imagerie à microscope étant en outre **caractérisé par** :

un dispositif de balayage lumineux (420) incluant un premier élément de balayage qui balaie les foyers d'un bout à l'autre de l'échantillon dans une direction de balayage lent et un second élément de balayage qui balaie les foyers d'un bout à l'autre de l'échantillon (450) dans une direction de balayage rapide, l'élément (430) de génération de foyers et le dispositif de balayage lumineux (420) recevant la lumière provenant de la source de lumière multiphotons qui est couplée le long de la voie d'excitation de lumière (440) sur l'échantillon (450), le dispositif de balayage lumineux fonctionnant en réponse à une commande informatique pour mettre en œuvre un balayage x-y de l'échantillon avec la pluralité de foyers, et dans lequel le chemin de collecte de lumière inclut un miroir mobile pour coupler la lumière provenant de la pluralité de foyers dans l'échantillon à la pluralité d'éléments optiques de collecte de lumière.

2. Système selon la revendication 1, dans lequel la pluralité d'éléments détecteurs (480) à PMT comprend un tube photomultiplicateur à anodes multiples (MA-PMT).

3. Système selon la revendication 2,

dans lequel une pluralité de fibres optiques couplent la lumière collectée au MA-PMT et, préférablement, chacune de la pluralité de fibres optiques est interfacée avec une pluralité de canaux du MA-PMT afin de détecter une pluralité de canaux spectraux ; et/ou dans lequel la pluralité de fibres optiques incluent un ou plusieurs guides de lumière liquides (2020) et, préférablement, chacune de la pluralité de fibres optiques est adaptée pour collecter la lumière provenant de foyers qui balaient une pluralité de régions adjacentes pour former un balayage d'entrelacement de l'échantillon, dans lequel, préférablement, le balayage d'entrelacement de l'échantillon réduit la diaphonie entre les canaux de MA-PMT.

4. Système selon la revendication 1, dans lequel la source de lumière multiphotons comprend un laser.

5. Système selon la revendication 1, comprenant en outre un dispositif de découpe de tissu, et/ou

un processeur de données qui reçoit des données spectrales provenant de la pluralité d'éléments détecteurs à PMT, et/ou

un système de détection de position couplé au dispositif de balayage lumineux, pour détecter au moins l'un parmi : une position d'au moins l'un des éléments de balayage et une orientation d'au moins l'un des éléments de balayage, et/ou

un élément optique disposé dans le chemin d'excitation de lumière pour recevoir la lumière provenant de l'élément de génération de foyers, l'élément optique introduisant une dispersion chromatique qui est opposée à celle de l'élément de génération de foyers.

6. Système selon la revendication 1, dans lequel la pluralité d'éléments détecteurs (480) à PMT détectent une pluralité de longueurs d'onde différentes.

7. Système selon la revendication 1, dans lequel le chemin de collecte de lumière (470) inclut en outre un réseau de microlentilles, la pluralité d'éléments détecteurs (480) à PMT recevant des émissions de fluorescence provenant du réseau de microlentilles, ou

dans lequel la pluralité d'éléments optiques de collecte de lumière sont une pluralité de collecteurs de lumière (5040) positionnés devant les éléments détecteurs (480) à PMT.

8. Procédé d'imagerie d'un échantillon comprenant l'actionnement d'un système d'imagerie à microscope incluant une source de lumière multiphotons, un élément de génération de foyers couplé à une lentille qui génère une pluralité de foyers à balayer d'un bout à l'autre d'un échantillon, une pluralité d'éléments optiques de collecte de lumière qui couplent la lumière émise par l'échantillon au niveau de chacun de la pluralité de foyers à une pluralité d'éléments détecteurs à PMT qui détectent chacun des foyers respectifs de la pluralité de foyers, le procédé comprenant en outre :

la génération d'une pluralité de foyers à l'aide d'un élément (430) de génération de foyers qui reçoit de la lumière provenant d'une source de lumière multiphotons ;

le balayage de la pluralité de foyers d'un bout à l'autre de l'échantillon avec un premier élément de balayage qui balaie dans une direction de balayage lent et avec un second élément de balayage dans une direction de balayage rapide, le premier élément de balayage et le second élément de balayage fonctionnant en réponse à un dispositif de commande ;

la collecte de lumière de fluorescence provenant de la pluralité de foyers avec la pluralité d'éléments optiques de collecte, dans lequel un miroir mobile couple la lumière provenant de la pluralité de foyers dans l'échantillon à la pluralité d'éléments optiques de collecte ; et

la détection de la lumière de fluorescence collectée avec la pluralité d'éléments détecteurs (480) à PMT qui sont couplés à la pluralité d'éléments optiques de collecte pour générer une image de l'échantillon.

9. Procédé selon la revendication 8 dans lequel la source de lumière multiphotons comprend un laser, et/ou

dans lequel les éléments optiques de collecte comprennent une pluralité de fibres optiques ou dans lequel les fibres optiques comprennent une pluralité de guides de lumière liquides (2020).

10. Procédé selon la revendication 8 dans lequel la pluralité d'éléments détecteurs détectent une pluralité de longueurs d'onde différentes.

11. Procédé selon la revendication 8 dans lequel les premier et second éléments de balayage mettent en œuvre un balayage entrelacé des foyers d'un bout à l'autre de l'échantillon.

12. Procédé selon la revendication 8 comprenant en outre le traitement de données spectrales provenant de la pluralité d'éléments détecteurs à l'aide d'un processeur de données, et/ou

la découpe du tissu à l'aide d'un dispositif de découpe de tissu, et/ou

la collecte de lumière provenant de l'échantillon à l'aide d'un réseau de microlentilles dans un chemin de collecte de lumière.

13. Procédé selon la revendication 8 dans lequel la pluralité d'éléments optiques de collecte comprend en outre une pluralité de fibres optiques qui collectent la lumière provenant de foyers correspondants dans l'échantillon.

**Step 110**

Imaging

Sample
10

20
x/y/z-table

_30_

Microtome

**Step 120**

Sample
translation

**Step 130**

Sample
transl &
sectioning

Repeat

FIG. 1

FIG. 2

FIG. 3

FIG. 4A

EP 3 087 423 B1

FIG. 4B

FIG. 4C

EP 3 087 423 B1

| Zernike coefficients | Figure 3P Embodiment | Figure 1 Embodiment |
|---|---|---|
| Z5 (astigmatism 2,-2) | 0.450 | -0.578 |
| Z6 (astigmatism 2,2) | 0.100 | -0.079 |
| Z7 (coma 3,-1) | -0.153 | -0.074 |
| Z8 (coma 3,1) | 0.171 | 0.061 |
| Z9 (trefoil 3,-3) | -0.086 | -0.002 |
| Z10 (trefoil 3,3) | -0.103 | -0.004 |
| Z11 (spherical) | -0.073 | -0.052 |
| Integrated coeff. (wave) | 1.50 | 0.68 |
| Spot diagram of the corner focus (scale bar; left: 40 µm, right: 20 µm) | CBJ : 0.0000, 0.0000 DEG · 0.7800 · 40.00 · SURFACE : IMA    IMA: 0.377, 0.416 MM · SPOT DIAGRAM · CALVANOMETER WED JAN 11 2012 UNITS ARE µm · FIELD : 1 · RMS RADIUS : 8.499 · GEO RADIUS : 17.633 · SCALE BAR : 40 · MMM_DESCANNING ZMX CONFIGURATION 1 OF 9 · REFERENCE : CHIEF RAY | CBJ : 0.0000, 0.0000 DEG · 0.7800 · 20.00 · SURFACE : IMA    IMA: 0.305, 0.448 MM · SPOT DIAGRAM · CALVANOMETER WED JAN 11 2012 UNITS ARE µm · FIELD : 1 · RMS RADIUS : 2.518 · GEO RADIUS : 6.046 · SCALE BAR : 20 · MMM_DESCANNING ZMX CONFIGURATION 1 OF 9 · REFERENCE : CHIEF RAY |
| RMS radius (µm) | 8.50 | 2.52 |

FIG. 5

2000

FC

LLG
2020

2010
Lens

20X

AR Coated
Window
2510

Immersion Oil
2520

Fiber Coupling Unit
2500

Glass core

2020
LLG

EP 3 087 423 B1

FIG. 6

FIG. 7

FIG. 8

3030

3020

Deflection of
reference light
as mirror scans

Front surface
of mirror

3010

FIG. 9A

3030

3020

3040

3010

FIG. 9B

EP 3 087 423 B1

FIG. 10A

FIG. 10B

FIG. 11A

FIG. 11B

FIG. 11C

FIG. 11D

FIG. 11E

FIG. 12A

EP 3 087 423 B1

FIG. 12B

EP 3 087 423 B1

FIG. 12C

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 61920654
- WO 02084265 A1
- WO 2006127967 A2
- US 20130142413 A

**Non-patent literature cited in the description**

- **MATHIEU DUCROS et al.** Efficient Large Core Fiber-based Detection for Multi-channel Two-photon Fluorescence Microscopy and Spectral Unmixing. *Journal of Neuroscience Methods*, 15 June 2011, vol. 198 (2), 172-180